Europäisches Patentamt

European Patent Office

Office européen des brevets

(19)

(11) Numéro de publication: **0 079 830**
**A1**

# DEMANDE DE BREVET EUROPEEN

(12)

(21) Numéro de dépôt: 82402066.3

(22) Date de dépôt: 10.11.82

(51) Int. Cl.³: **H 02 K 21/14**
**H 02 K 37/00**

(30) Priorité: 12.11.81 FR 8121349

(43) Date de publication de la demande:
25.05.83 Bulletin 83/21

(84) Etats contractants désignés:
AT BE CH DE FR GB IT LI LU NL SE

(71) Demandeur: CROUZET
128, Avenue de la République
F-75011 Paris(FR)

(72) Inventeur: Paillet, Pierre
27 Allée Georges Braque
F-26000 Valence (Drôme)(FR)

(74) Mandataire: Bloch, Robert et al,
39 avenue de Friedland
F-75008 Paris(FR)

(54) Petit moteur électrique.

(57) Petit moteur électrique du type comprenant un rotor (92) à aimant permanent tournant dans un stator constitué par une ou plusieurs bobines (5, 6) et des pièces polaires (1, 2, 3 et 4). Ce moteur se caractérise par des moyens (83) et (62) ainsi que (73) pour maintenir préassembler ses divers constituants au cours de son assemblage.

L'invention peut être utilisée pour la fabrication en grande série des petits moteurs synchrones ou pas à pas.

EP 0 079 830 A1

./...

FIG.1

"Petit moteur électrique."

La présente invention concerne les petits moteurs électriques et plus particulièrement les moteurs synchrones et les moteurs pas à pas comprenant un rotor à aimant permanent, magnétisé selon plusieurs paires de pôles, solidaires d'un axe tournant dans deux paliers soutenus par un stator. Le stator est constitué par un assemblage de deux bobines et de pièces polaires disposées à l'intérieur d'une carcasse en matériau magnétique.

Les moteurs de ce type sont largement diffusés et utilisés dans l'industrie. Ils sont fabriqués en grande série et leur réalisation a été optimisée en réduisant le nombre de leurs constituants au strict minimum et en utilisant des pièces identiques chaque fois que cela est possible. C'est le cas, par exemple, des bobines, s'il y en a plusieurs, et des pièces polaires.

Pour réduire encore le prix de revient de ce type de moteur il est alors nécessaire de les étudier en vue de gagner du temps au cours de leur fabrication en en simplifiant l'assemblage et en réduisant le nombre des opérations sur postes de travail distincts.

La présente invention a pour but la réalisation d'un tel moteur. Dans celui-ci en effet les divers constituants ont été étudiés et agencés pour faciliter son montage sur chaîne. Sa fabrication consiste à assembler, par empilage, ses divers constituants de façon à réaliser un sous-ensemble solide facile à transférer ensuite sur un poste de soudure électrique. Il suffit d'une seule opération de soudure simultanée de deux flasques, disposés de part et d'autre de sa carcasse magnétique pour le fermer définitivement.

Pour ce faire, le moteur selon l'invention se caractérise en ce qu'il comporte des moyens pour maintenir préassemblé au cours du montage d'une part, chaque bobine avec un support palier et la pièce polaire correspondante et d'autre part, la ou les deux bobines à l'intérieur de la carcasse magnétique. Pour monter un tel moteur, il suffit alors d'empiler, par exemple sur un guide cylindrique ayant sensiblement le diamètre d'un rotor, les divers composants du stator.

Grâce aux moyens de maintien prévus, le sous-ensemble ainsi constitué peut être retourné d'un bloc pour y introduire un rotor avant d'être définitivement fermé par soudure électrique en certains points privilégiés, de deux flasques sur chacune des tranches, inférieure et supérieure de la carcasse magnétique.

Les moyens de préassemblage de l'invention se caractérisent par le fait que, chaque support palier, moulé dans un matériau plastique, comporte au moins deux petits crochets ayant pour but de s'accrocher sur deux arêtes prévues dans l'alésage interne de la ou des bobines et par le fait que, sa carcasse magnétique, obtenue à partir d'une tôle roulée, a la forme d'un cylindre ouvert latéralement.

Dans cette ouverture, quatre saillies ont pour rôle de lier la ou les bobines avec la carcasse par serrage élastique sur le ou les passe-fils.

Le dessin annexé illustre, à titre d'exemple, un mode de réalisation d'un moteur conforme à la présente invention.

- La figure 1 est une vue du moteur en coupe brisée.
- La figure 2 est une vue du stator au cours de son assemblage, en coupe brisée.
- La figure 3 montre la disposition relative d'une pièce polaire et d'un support palier.

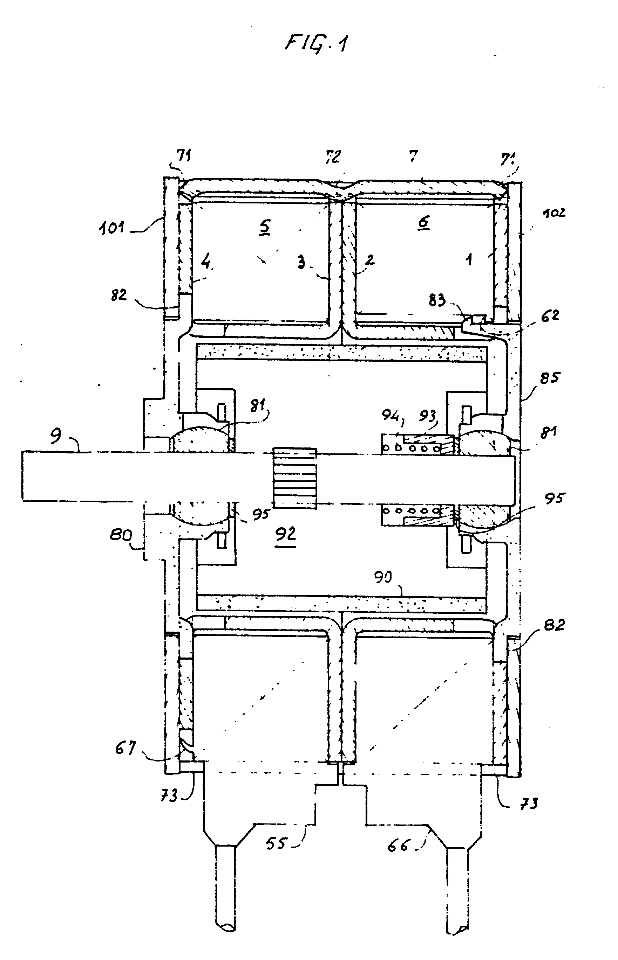

Tel que représenté, figure 1, le stator du moteur est réalisé de façon connue par un assemblage des deux bobines 5,6 et de pièces polaires 1, 2, 3 et 4, en matériau magnétique, qui recouvrent les bobines de manière à canaliser le flux magnétique. Une pièce cylindrique 7, également en matériau magnétique tel que par exemple de la tôle électrozinguée, entoure l'ensemble pour refermer le circuit magnétique. Sur les pièces polaires extérieures 1 et 4 sont assemblés et ajustés deux supports paliers 80 et 85, moulés en matériau isolant et amagnétique. Les deux bobines sont identiques ainsi que les quatre pièces polaires. Ces éléments possèdent des moyens de prépositionnement angulaire qui obligent au cours du montage à respecter leurs positions relatives nécessaires au fonctionnement du moteur.

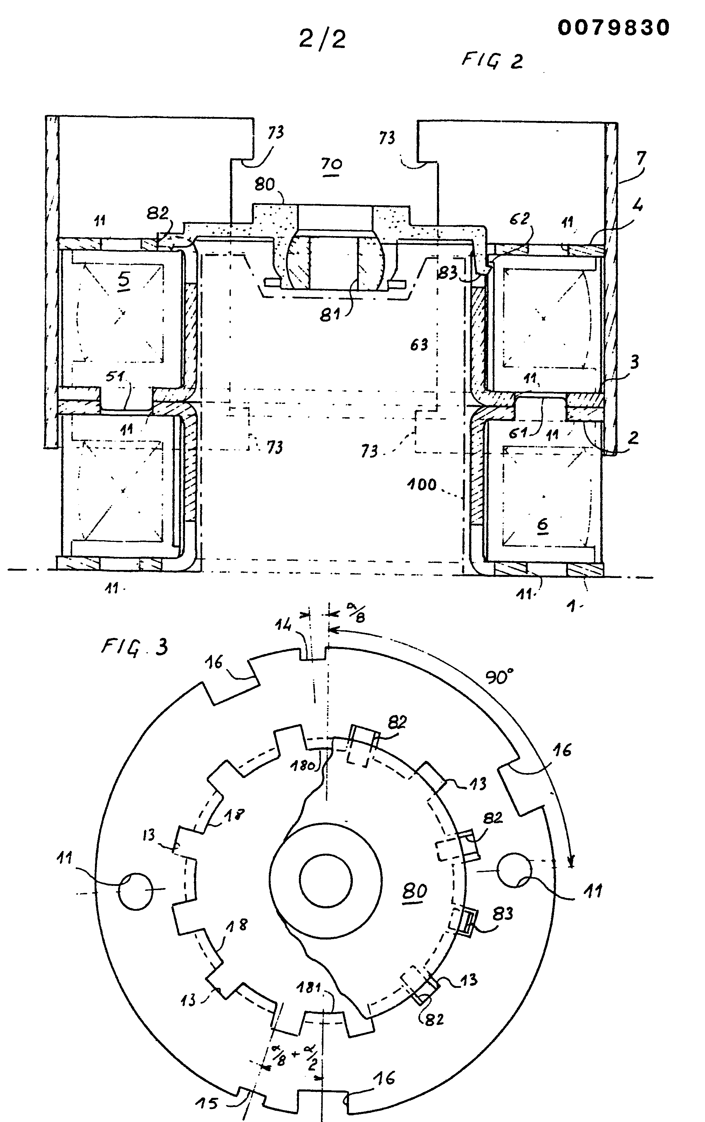

C'est ainsi que chaque pièce polaire (figure 3), outre les pôles 18 dont le nombre correspond aux paires de pôles $\propto$ du moteur, possède deux trous 11, diamétralement opposés sur un même rayon et de diamètres identiques. Ces trous sont disposés sur un axe à 90° avec l'axe de symétrie d'un de ses pôles, le pôle 180 par exemple. De son côté, la bobine a sur une de ses joues un téton 61/51, disposé sur le même rayon que les trous 11 et d'un diamètre lui permettant de pénétrer avec un léger jeu dans lesdits trous. Ce téton fait un angle de 90° avec l'axe de passage du passe-fil 66/55 de la bobine.

Les supports paliers, 80 et 85, ont chacun des crochets 83 et des protubérances radiales 82. Ces protubérances peuvent s'ajuster avec serrage dans le fond des encoches 13 correspondant au  découpage des pôles.

Nous aurons par exemple pour un moteur à douze paires de pôles ( $\propto$ = 12) six protubérances radiales disposées à 60° les unes des autres et deux crochets diamétralement opposés.

Les protubérances permettent de centrer rigoureusement les supports paliers 80 et 85 dans les pièces polaires et par là même d'obtenir un bon centrage de l'axe 9 du rotor 92 dans les paliers 81.

Enfin, la pièce polaire outre les deux trous 11 calés par rapport à l'axe d'un pôle, comporte deux encoches radiales 14 et 15 sur sa périphérie ainsi que trois échancrures 16. Les échancrures 16 servent de simples dégagements pour permettre le passage de trois petits écrans 67 venus de moulage sur la joue de la bobine, du côté ne comportant pas le téton.

La position de ces écrans correspond à l'emplacement des points de soudure électrique répartis sur les flasques de fermeture 101 et 102 pour éviter les projections de zinc fondu vers l'intérieur du moteur au moment de la fusion du métal.

Les deux encoches 14 et 15 font respectivement un angle ($\propto$/8) et ($\propto$/8 + $\frac{\propto}{2}$) avec l'axe du pôle 180 et du pôle 181 qui lui est diamétralement opposé et coopèrent, l'une ou l'autre, suivant le sens du montage d'une pièce polaire, avec des demi-découpages-pliages 71 et un embouti 72 prévus le long d'une génératrice de la carcasse magnétique 7. Cette génératrice est celle diamétralement opposée à l'ouverture 70 destinée au passage des passe-fils.

C'est l'ajustement de ces demi-découpages et de l'embouti dans les encoches 14 ou 15 qui permet d'obtenir un positionnement angulaire rigoureux des pôles 18 entre eux.

Ainsi définie, la partie statorique du moteur selon l'invention permet un montage simple par empilage (figure 2) des composants par exemple sur un posage cylindrique 100 de diamètre sensiblement égal à celui du rotor 92.

On empile successivement, dans l'ordre et dans le sens adéquat, les pièces polaires et les bobines. La présence des trous 11 coopérant avec les tétons 51/61 et des échancrures 16 correspondant aux écrans 67, impose une préorientation relative des pièces au cours du montage. Sur la dernière pièce polaire 4, on ajuste le support palier 80 dont les crochets 83 passent en force derrière deux arêtes 62 faisant chacune saillie dans deux rainures 63 aménagées à l'intérieur de l'alésage de la bobine 5. La carcasse 7, en tôle électrozinguée roulée, a un diamètre intérieur légèrement plus petit que le diamètre extérieur des pièces polaires. En élargissant son ouverture 70, sans dépasser sa limite élastique, on enfile cette carcasse sur l'empilage du stator dont les deux passe-fils 55, 66 sont ainsi maintenus prisonniers par les quatre reliefs 73. Cet ensemble est ensuite retourné pour y introduire le rotor 92 solidaire de l'axe 9. Des rondelles 95, un ressort 94 et une pièce coulissante 93 maintiennent de façon classique le rotor et son aimant 90 à l'intérieur du stator sur lequel on place le second support palier 85 dont les crochets 83 se verrouillent dans les rainures 63 de la bobine 6.

Grâce aux crochets 83, limitant l'action du ressort 94, et au serrage de la carcasse 7 sur les pièces polaires, on obtient ainsi un ensemble solide facilement transportable sur un poste de soudure électrique où l'on ferme définitivement le moteur par deux flasques 101 et 102.

Le moteur objet de l'invention permet une fabrication en grande série de petits moteurs synchrones ou pas à pas aux multiples usages industriels.

Revendications

1.     Petit moteur électrique du type comprenant, un rotor à aimant permanent (92), solidaire d'un axe (9) tournant dans deux paliers (80, 85), un stator constitué par un assemblage d'une ou plusieurs bobines (5, 6) et de pièces polaires (1-4), disposées à l'intérieur d'une carcasse (7) en matériau magnétique, caractérisé par le fait qu'il comporte des moyens pour maintenir préassemblées, au cours du montage, d'une part chaque bobine (62,63 - 51,61) avec un support palier (83) et la pièce polaire (11) correspondante et, d'autre part, les deux bobines (55, 66) à l'intérieur de la carcasse statorique (73).

2.     Petit moteur électrique, selon la revendication 1,caractérisé par le fait que les supports paliers (80, 85), moulés en matériau isolant, comprennent, outre des moyens de centrage (82), deux crochets (83) destinés à s'accrocher sur deux reliefs (62) prévus à cet effet dans l'alésage des bobines et en ce que la carcasse statorique (7) réalisée en tôle roulée, possède une ouverture munie de quatre saillies (73) venant emprisonner, par serrage élastique, les deux passe-fils (55 et 66) des bobines (5 et 6).

3.     Petit moteur électrique selon la revendication 1, caractérisé par le fait que les pièces polaires (1-4) comportent d'une part, deux trous (11) de même diamètre, situés sur un même rayon et disposés à 90° par rapport à l'axe de symétrie de deux pôles opposés (180-181) et, d'autre part, deux encoches radiales (14-15) faisant respectivement un angle de $(\frac{\alpha}{8})$ et $(\frac{\alpha}{2} + \frac{\alpha}{8})$ par rapport à ce même axe de symétrie, $\alpha$ étant le nombre de paires de pôles sur une bobine du moteur pour coopérer avec des demi-découpages-pliages et des emboutis de la carcasse (7).

FIG.1

FIG 2

FIG. 3

# RAPPORT DE RECHERCHE EUROPEENNE

Office européen des brevets

**0079830**
Numéro de la demande

EP 82 40 2066

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | H 02 K 21/14 |
| Y | FR-A-2 320 654 (LICENTIA) *Page 2, ligne 5-39; page 3, lignes 1-8; figures 1,2* | 1-3 | H 02 K 37/00 |
| | --- | | |
| Y | DE-A-2 819 911 (MERKLE) *Page 4, lignes 10-31; figure 3* | 1,2 | |
| | --- | | |
| A | US-A-3 504 253 (KAVANAUGH) *Colonne 2, lignes 64-72; figure 1* | 2 | |
| | --- | | |
| A | US-A-4 045 697 (FOLIK) *Colonne 2, lignes 24-68; colonne 3, lignes 1-7; figures 1-4* | 2 | |
| | --- | | |
| A | DE-A-1 513 854 (CROUZET) | 1 | **DOMAINES TECHNIQUES RECHERCHES (Int. Cl. 3)** |
| | ----- | | H 02 K |

Le présent rapport de recherche a été établi pour toutes les revendications

| Lieu de la recherche | Date d'achèvement de la recherche | Examinateur |
|---|---|---|
| LA HAYE | 15-02-1983 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82